(19) **Europäisches Patentamt**

**European Patent Office**

**Office européen des brevets**

(11) **EP 0 289 200 B2**

(12) # NEW EUROPEAN PATENT SPECIFICATION

(45) Date of publication and mention
of the opposition decision:
**22.07.1998 Bulletin 1998/30**

(51) Int Cl.6: **G01N 15/14**

(45) Mention of the grant of the patent:
**24.08.1994 Bulletin 1994/34**

(21) Application number: **88303536.2**

(22) Date of filing: **20.04.1988**

(54) **Apparatus and method for particle analysis**

Vorrichtung und Verfahren zur Untersuchung von Teilchen

Appareil et méthode pour l'analyse de particules

(84) Designated Contracting States:
**AT BE CH DE FR GB IT LI NL SE**

(30) Priority: **27.04.1987 US 43223**
**19.05.1987 EP 87304423**
**12.11.1987 US 119797**

(43) Date of publication of application:
**02.11.1988 Bulletin 1988/44**

(73) Proprietors:
• **Preikschat, Fritz K.**
**Redmond, Washington 98004 (US)**
• **Preikschat, Ekhard**
**Bellevue Washington 98004 (US)**

(72) Inventors:
• **Preikschat, Fritz K.**
**Redmond, Washington 98004 (US)**
• **Preikschat, Ekhard**
**Bellevue Washington 98004 (US)**

(74) Representative: **Arthur, Bryan Edward et al**
**Withers & Rogers**
**4 Dyer's Buildings**
**Holborn**
**London EC1N 2JT (GB)**

(56) References cited:
| DE-B- 2 431 107 | US-A- 3 676 647 |
| US-A- 3 781 674 | US-A- 3 858 851 |
| US-A- 4 017 186 | US-A- 4 140 395 |
| US-A- 4 387 993 | |

• REVIEW OF SCIENTIFIC INSTRUMENTS, vol. 49, no. 12, December 1978, pages 1617-1621; W.G. EISERT et al: "Internal calibration to absolute values in flowthrough particle size analysis"
• OPTICAL ENGINEERING, vol. 23, no. 5, September/October 1984, pages 591-603,Society of Photo-Optical Instrumentation Engineers, Bellingham, Washington, US;D.J. HOLVE et al.: "Optical particle counting, sizing, and velocimetry using intensity deconvolution"

Remarks:
The file contains technical information submitted after the application was filed and not included in this specification

EP 0 289 200 B2

## Description

This application is a continuation-in-part of U.S. Serial No. 043,223, filed August 27, 1987, which is in turn a continuation-in-part of U.S. Serial No.821,781, filed January 23, 1986.

### Field of the Invention

The present invention relates to an apparatus and method for analyzing the size and number of particles in a fluent medium.

### Background of the Invention

There exist many applications in industry and science in which it is required to determine the size and number of particles suspended in a fluent (i.e., liquid or gaseous) medium. These determinations can be very important in many manufacturing processes such as pharmaceuticals, plastics, chemicals, and paper, to name a few examples. Processes such as crystal growth, precipitation, polymerization, gravimetric separation, grinding, etc., must be monitored to control the quality of the product.

The particles in a slurry can range from submicron to millimeters in size, and the relative quantities of the different sizes may be very critical to the quality and performance of the product. For example, a pulp slurry may contain fibers which are about 10-40 microns in size as well as brightener and filler particles (clay) which are mostly less than 4 microns in diameter. The size of coal dust will influence the rate at which it burns. The powders in pills and capsules must be ground to specific sizes to dispense drugs at optimum rates in the human body.

Ideally, the particle measurements should be made on-line to provide real-time information for process control, and also avoid distortion of the particle size information by removing samples from the process.

In the past, a number of different technologies have been developed for the analysis of particle size, using conventional or laser light sources, ultrasonic beams, cathode ray tubes, and Stoke's law of sedimentation rates. The optical devices which exist today utilize transmission geometries and use various methods to determine size. The method used in most commercially available instruments measures the light intensity scattered at various small forward angles (e.g., Fraunhoffer diffraction patterns) to determine particle size. Another method uses a beam of light scanned across a small chamber through which the fluent medium is forced to flow. A detector is positioned on the opposite side of the flow such that particles cause interruptions of the light received by the detector (Staffin, U.S. Patent No. 3,676,647, and Ogle, U.S. Patent No. 3,858,851). The time that the beam is interrupted is used as a measure of the size of the particle. A variation on this method is devices which force the particles through a sampling chamber at a known velocity and keep the beam stationary (Eisert, U.S. Patent No. 4,110,043).

The major reason for the use of the transmission geometry is that the light scattered by particles in the forward direction (i.e., less than 90° from the original direction of the light beam) is up to 10,000 times more intense than the light scattered in the backwards direction. The limitation of transmission systems is that the particle concentration in the medium must be very low (less than .01 percent by volume) to allow the light to pass through the fluent medium, be scattered by a particle, and then pass further through the medium to be detected. Obviously, the use of such methods is impossible at normal process concentrations, which are commonly much greater than one percent. Attempts to use such devices on-line must involve sampling systems which are susceptible to clogging, and dilution systems that cause errors by altering the composition of the sample.

### Summary of the Invention

The amount of light scattered by a fluent medium depends on a number of parameters: the number of particles suspended in the medium, the index of refraction of both the particles and the fluent medium, the size and shape of the particles, and the turbidity and color of the medium. With an unfocused light beam one is able to measure only the sum total of all of these effects, i.e., if one wants to measure one parameter only, e.g., particle size, one has to assume that all of the other parameters remain constant. In this regard, devices which measure particle size on a macroscopic basis by illuminating a large area (Kreikebaum, U.S. Patent No.4,140,395) to determine the integrated scattering from a suspension of particles will be directly dependent on turbidity and optical density. Such devices can thus only measure the mean particle size, and only if the other variables remain constant.

The present invention provides an optical technique for analyzing individual particles on a microscopic basis suspended in a fluent medium. The term "particles" as used herein includes cellular particles such as bacteria, and in general encompasses any material having optical properties different from that of the suspending fluent medium. The technique of the present invention is based upon the backscattering of light by the particles, and does not require that the fluent medium flow through a sample chamber. Given presently available optical technology, the technique of the present invention is capable of detecting particles as small as 0.5 microns in diameter.

It is important to note that because of the extremely small amounts of light backscattered by individual particles (up to 10,000 times less than at forward angles), the backscattering method has never before been used to measure the particle size of individual particles. Only by the use of a focused beam can the size of individual particles be measured with backscattered (scattering angle greater than 90°) light.

The present invention is based upon the recognition that if the total power of the light source is concentrated onto a diffraction-limited focal spot of comparable size to the smallest particles to be measured (about 1 micron), then sufficient light can be backscattered, even by micron-sized particles, to be measured by a sensitive high-speed detection system. The capability of the present invention to measure the size of individual particles at normal process concentrations through a single optical access port eliminates the limitations of the aforementioned devices.

The present invention comprises an apparatus according to claim 1.

The optical source preferably comprises a laser diode, and the optical system focuses the light from the laser diode such that the size of the focal spot is approximately equal to the size of the light emitting area of the laser diode. The photodetector means provides a series of pulses respectively associated with particles positioned at the focal spot, and the detection means comprises means for counting such pulses, and means for preventing the counting of a pulse that has a rise time above a predetermined threshold. By means of such rise time discrimination, the system does not count particles that are not at the focal spot. The apparatus of the present invention may also comprise a body to which the illumination means is mounted. Preferably the illumination means positions the focal spot outside the body adjacent to the window and includes means for varying the position of the focal spot in a direction parallel to the window. The detection means may include means for producing an integrated amplitude signal having a magnitude corresponding to the average value of the electrical signal, and said means for adjusting the distance between the focal spot and the window, is provided to enable the integrated signal amplitude to be maximised.

In a preferred embodiment, the apparatus comprises a probe that may be implemented entirely without electrical components, to thereby provide an intrinsically safe probe particularly suitable for use in explosive or harsh environments. In this embodiment, the illumination means comprises a monomode fiber optic cable having first and second ends, a laser diode, and means for coupling light from the laser diode into the first end of the monomode cable. The optical system is positioned to receive light from the second end of the monomode cable. Light backscattered by particles at the focal spot may be returned from the probe by a return fiber optic cable, and pneumatic means may be provided for causing the focal spot to oscillate in the fluent medium. For this embodiment, means may also be provided for synchronizing the detection means to the oscillation of the focal spot. A multiple wavelength system for characterizing individual particles is also disclosed.

Brief Description of the Drawings

FIGURE 1 is a cross-sectional view of a probe according to the present invention for on-line particle measurement;

FIGURE 2 is a cross-sectional view of the optical assembly of the probe of FIGURE 1;

FIGURE 3 is a cross-sectional view taken along line 3-3 of FIGURE 2;

FIGURE 4 is an electrical schematic diagram of the vibration system;

FIGURE 5 is a graphical view of the beam and focal spot;

FIGURE 6 is a cross-sectional view taken along line 6-6 of FIGURE 5;

FIGURE 7 is a circuit diagram of the preamplifier;

FIGURE 8 is a circuit diagram of the detection and counting circuit;

FIGURE 9 is a signal diagram corresponding to the circuit of FIGURE 8;

FIGURE 10 is a logic diagram corresponding to the circuit of FIGURE 8;

FIGURE 11 illustrates the use of a nonscanning probe according to the present invention;

FIGURE 12 is a block diagram of an integrated pulse amplitude circuit;

FIGURE 13 illustrates the use of a common optical path for the illumination and backscattered light;

FIGURE 14 is a cross-sectional view taken along the line 14-14 in FIGURE 13, illustrating the use of a target-shaped detector to simultaneously measure backscattered light from the focal spot and the halo;

FIGURE 15 is a system diagram of an intrinsically safe particle analyzer according to the present invention;

FIGURE 16 is a schematic view, partly in cross section, of a portion of the probe of Figure 15;

FIGURE 17 is a second partial cross-sectional view of the FIGURE 15 embodiment; and

FIGURE 18 is a diagram of a dual wavelength system according to the present invention.

Detailed Description of the Drawings

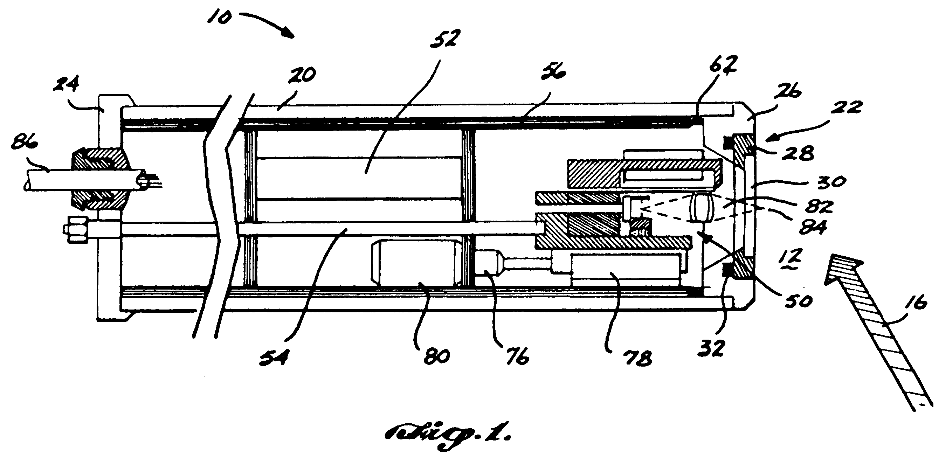

The principles of the present invention are disclosed by way of example by probe 10 shown in FIGURE 1. Probe 10 is adapted for analyzing the sizes and numbers of particles suspended in fluent (e.g., liquid or gaseous) medium 12. Probe 10 comprises cylindrical tube 20 that includes forward end 22 and back end 24. Forward end 22 includes front wall 26 and window carrier 28 in which window 30 is centrally mounted. The window carrier is threaded into front wall 26, and O-ring 32 prevents leakage of the fluent medium into the interior of the probe. The window permits light to pass between the interior of tube 20 and fluent medium 12. For the common case in which the fluent medium flows past the probe, the probe is preferably positioned such that window 30 is oriented at a slight angle to the flow direction (indicated by arrow 16), an arrangement that tends to keep window 30 clean and free of accumulated sediment. In the alternative, forward end 22, including window 30, may be inclined with respect to the longitudinal axis of probe 10. In a preferred embodiment, window 30 comprises synthetic sapphire, and window carrier 28 comprises titanium. The advantages of sapphire are its hardness, abrasion resistance, and low light loss in the infrared. The advantage of titanium is that it is highly corrosion resistant, and can be used over a wide range of pH levels. However, the most important advantage flowing from the combination of sapphire and titanium is that the temperature coefficient of synthetic sapphire (8 parts per million per degree centigrade) is very close to that of titanium (8.5 parts per million per degree centigrade). Thus the window/carrier combination can be heated over a wide range of temperatures, without cracking the window.

Enclosed within tube 20 are optical assembly 50, electronics package 52, heat pipe 54 and insulating inner tube 56. Inner tube 56 is positioned adjacent the inner wall of tube 20, and is longitudinally secured by means of back end 24 and springs 62 at forward end 22 of the tube. The inner tube serves to thermally insulate the optical assembly and the electronics package, for those applications in which the cylindrical sidewalls of mounting tube 20 are inserted into the fluent medium. Optical assembly 50 is mounted within tube 20 adjacent window 30 by bearing slide 78 that permits the optical assembly to be moved along the longitudinal probe axis by stepper motor 80 and positioner 76. The optical assembly generates light beam 82 and focuses the light beam at focal spot 84 that is positioned just outside window 30. As described in greater detail below, the optical assembly also includes means for causing focal spot 84 to vibrate parallel to window 30, and means for detecting light backscattered by particles suspended in the volume of fluent medium 12 at the focal spot.

Heat pipe 54 extends rearwardly from the optical assembly to back end 24 of tube 20. The heat pipe conducts excess heat away from the optical assembly. Electronics package 52 is connected by suitable electrical conductors (not shown) to the optical assembly, and to coaxial cable 86 that extends from back end 24. Coaxial cable 86 serves to connect probe 10 to a suitable detection circuit, as described below.

It is to be understood that the present invention is not limited to the specific arrangement shown in FIGURE 1. For example for some applications, the probe may be contained within the fluent medium. In other applications, the optical assembly may be positioned adjacent a glass container or conduit that contains the fluent medium or through which the fluent medium is either stationary, or is being stirred to produce a circular flow. This versatility is a significant advantage of the present invention, and derives in significant part from the fact that the present invention uses a backscattering rather than transmission detection method, and does not require the fluent medium to flow through a sample chamber.

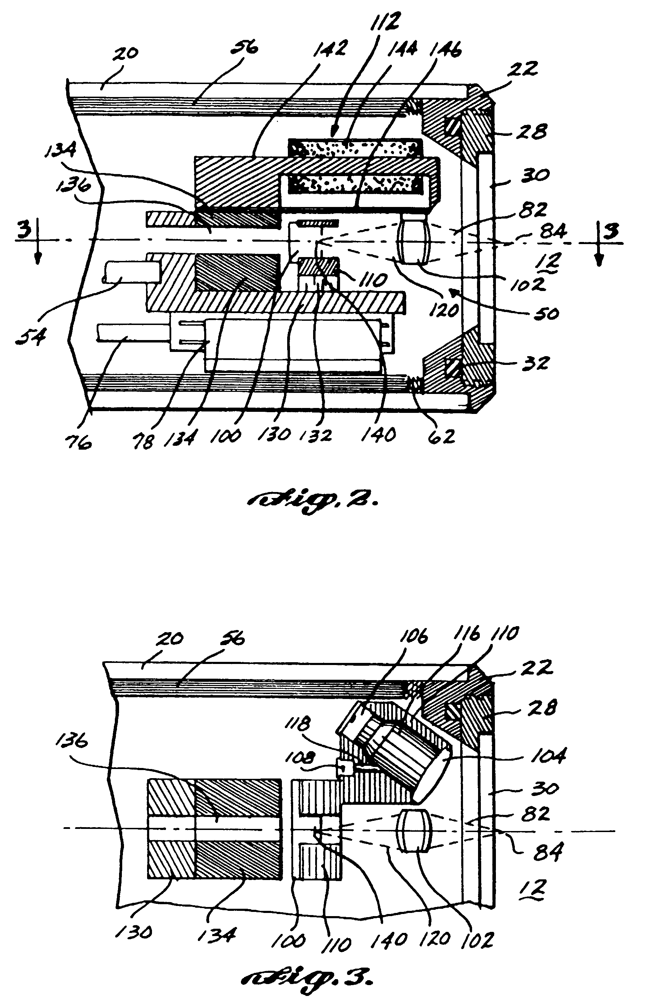

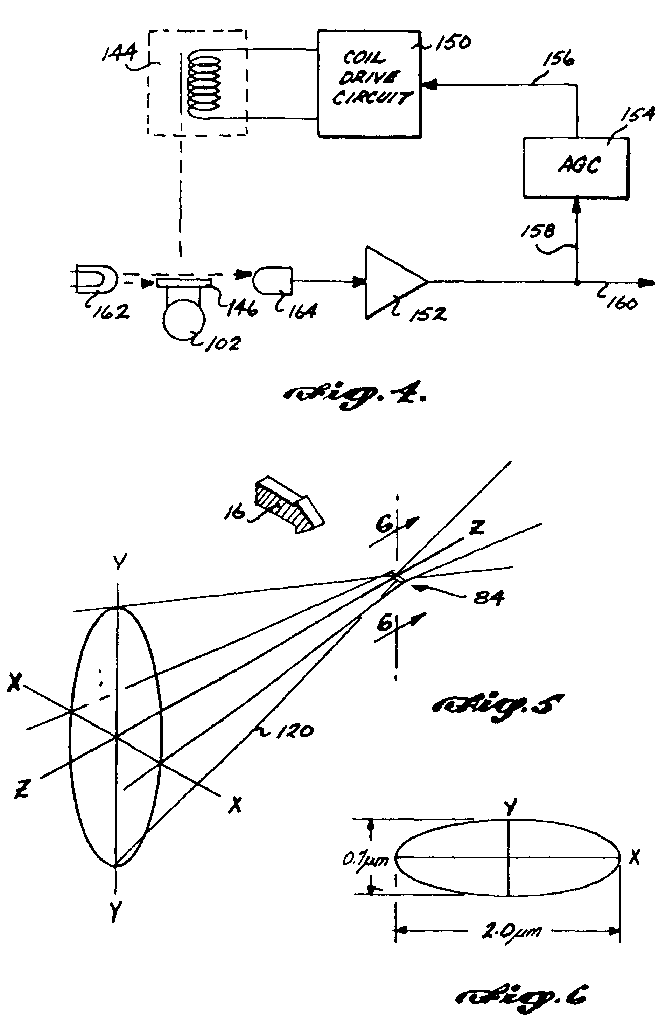

A preferred embodiment of optical assembly 50 is shown in greater detail in FIGURES 2 and 3. The optical assembly includes laser diode 100, lens system 102, lens 104, and photodetectors 106 and 108. Laser diode 100, lens 104 and photodetectors 106 and 108 are supported in aluminum block 110. Lens system 102 is supported by vibration assembly 112, as described more fully below. Block 110 includes passages 116 and 118 through which light passing through lens 104 may reach photodetectors 106 and 108. In operation of the system, laser diode 100 emits beam 120 that is focused by lens system 102 to produce beam 82 focused on focal spot 84. Particles in fluent medium 12 at focal spot 84 backscatter some of the light of beam 82, and a portion of the backscattered light is collected by lens 104 and focused at photodetector 106. Photodetector 108 is an optical element of the optical assembly, and may be induced to detect the ambient light level in fluent medium 12 (via lens 104) away from focal spot 84. Lens 104 is also an optical element, and may be omitted if photodetector 106 is sensitive enough to detect unfocused light scattered from focal spot 84.

Laser diode 100 produces monochromatic beam 120 that is generated from radiating area 140 of the laser diode. The optical assembly includes laser diode 100, lens system 102, lens 104, and photodetectors 106 and 108. Laser diode 100, lens 104 and photodetectors 106 and 108 are supported in aluminum block 110. Lens system 102 is supported by vibration assembly 112, as described more fully below. Block 110 includes passages 116 and 118 through which light passing through lens 104 may reach photodetectors 106 and 108. In operation of the system, laser diode 100 emits beam 120 that is focused by lens system 102 to produce beam 82 focused to focal spot 84. Particles in fluent medium 12 at focal spot 84 backscatter some of the light of beam 82, and a portion of the backscattered light is collected by lens 104 and focused at photodetector 106. Photodetector 108 is an optical element of the optical assembly, and may be included to detect the ambient light level in fluent medium 12 (via lens 104) away from focal spot 84. Lens 104 is also an optional element, and may be omitted if photodetector 106 is sensitive enough to detect unfocused light scattered from focal spot 84.

Laser diode 100 produces monochromatic beam 120 that is generated from radiating area 140 of the laser diode. Typical dimensions for radiating area 140 for currently available laser diodes are 0.7 by 2.0 microns. A suitable component for laser diode 100 is the type ML 4102 laser diode available from Mitsubishi. These very small dimensions are taken advantage of in the present invention by providing lens system 102 that focuses beam 120 to a focal spot 84 having dimensions comparable to the dimensions of radiating area 140, without the use of spatial filtering or complex optics. In order to provide for such focusing, lens system 102 is positioned at a distance of 2f from radiating area 140, where f is the focal length of lens system 102. This arrangement produces an image of the radiating area at focal spot 84 at a distance of 2f from the lens system. Lens system 120 is preferably a triplet lens system, as shown in FIGURES 1-3, in order to eliminate geometric aberration in beam 82. Because beam 120 is monochromatic, chromatic aberration is not a factor. In a preferred embodiment, lens system 102 has a focal length of 7.5 millimeters, and the lens system is positioned 15 millimeters from the radiating area 140, thus producing a focal spot 84 that is spaced 15 millimeters from lens system 102. The position of focal spot 84 with respect to window 30 is discussed in detail below.

The laser diode 100 and block 110 are mounted to base 130 and plastic block 134. If the ambient conditions require, a thermoelectric cooling element 132 may be used between block 110 and base 130 to establish a temperature gradient between these elements so as to maintain the laser diode at a suitable operating temperature. Base 130 is in thermal contact with heat pipe 54 to conduct heat away from the optical assembly. The base is mounted to the movable part of bearing slide 78 which is in turn attached to positioner 76. The fixed part of bearing slide 78 is mounted to inner tube 56. The bearing slide, positioner, and stepper motor provide means to adjust the distance between window 30 and focal spot 84. Block 134 is mounted to base 130 and provides support and vibration isolation for vibration assembly 112. Passage 136 is provided for electrical connections to laser diode 100.

In a preferred embodiment, lens 104 has a focal length of 8 millimeters and a diameter of 10 millimeters. The lens focuses the light scattered by particles at focal spot 84 onto photodetector 106 that is mounted a distance of 2f (16 millimeters) behind lens 104. Photodetector 106 has a large sensing area (2.5 millimeters in diameter), so that the photodetector will capture light scattered from focal spot 84, even when the focal spot is scanned over a distance of several millimeters. The orientation of lens 104 and photodetector 106 ensures that light reflected from window 30 will not be received by the photodetector.

Vibration assembly 112 comprises mild steel support 142, coil 144, and leaf spring 146. The entire vibration assembly is mounted to block 134. Energization of coil 144 by a suitable AC signal causes leaf spring 146 and attached lens system 102 to vibrate towards and away from coil 144, in an up and down direction in FIGURE 2. This vibration will cause focal spot 84 to vibrate parallel to window 30, in a direction into and out of the drawing in FIGURE 3. Thus focal spot 84 will sweep through and sequentially illuminate an essentially linear volume of fluent material 12, and reflections from particles in such volume will be detected by photodetector 106 and processed as described below. A suitable vibration frequency for lens system 102 and focal spot 84 is 500 Hertz, with a peak-to-peak displacement of the focal spot of 2 millimeters.

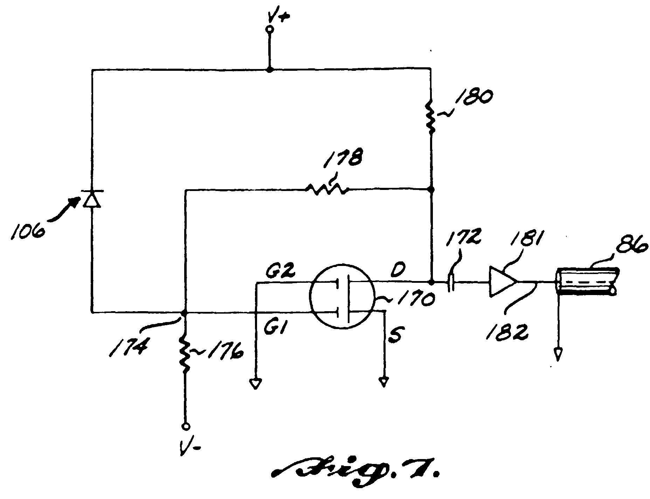

Coil 144 may be driven by the servo system illustrated in FIGURE 4. The servo system comprises coil drive circuit 150, LED 162, photodiode 164, amplifier 152 and AGC (automatic gain control) circuit 154. More or less light from LED 162 is received by photodiode 164 as leaf spring 146 moves down and up, causing the current to amplifier 152 to be reduced or increased. Coil drive circuit 150 energizes coil 144 at an amplitude controlled by AGC circuit 154 via a signal on line 156. AGC circuit 154 adjusts the signal on line 156 such that the AC amplitude of feedback signal 158 is kept constant. The signal on line 158 represents the position of the spring 146 and therefore of lens 102 and focal point 84, and this signal may be sent to the detection circuit, described below, on line 160. It may be desired to use such a signal to limit the analysis of the pulses from photodiode 106 (FIGURE 3) to time periods in which the focal spot is near the center of its range of motion, i.e., to those time periods during which the velocity of the focal spot is constant.

Window 30 may comprise any means by which the light is passed into and out of the fluent medium being analyzed. There may be instances where the process conditions (temperature, pressure, explosive gases) may be such that it is desirable to locate the electronics parts of the optical assembly some distance from the point of measurement. For these applications, alternative optical arrangements may be used, such as fiber optics or periscope optics, as described in detail below.

In the past, optical particle analyzers have typically relied on a transmission geometry rather than a backscattering or reflection geometry. In an arrangement using transmission geometry, particles are detected as they pass between the optical source and receiver. On the other hand in a backscattering arrangement the detector is positioned to detect light reflected or backscattered by the particles. One of the advantages of the backscattering arrangement of the present invention is that the measurement is not limited by the diffraction effects that come into play when the particle size is comparable to that of the focal spot. A second advantage of the present invention is that it is not necessary to distort the fluent medium being measured by forcing it to flow through a sample chamber as the particles are analyzed.

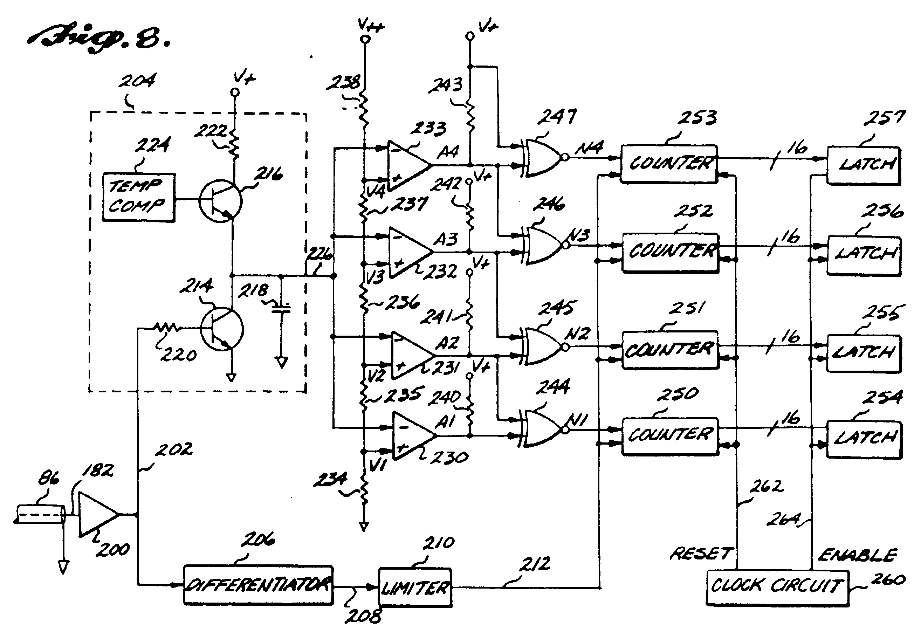

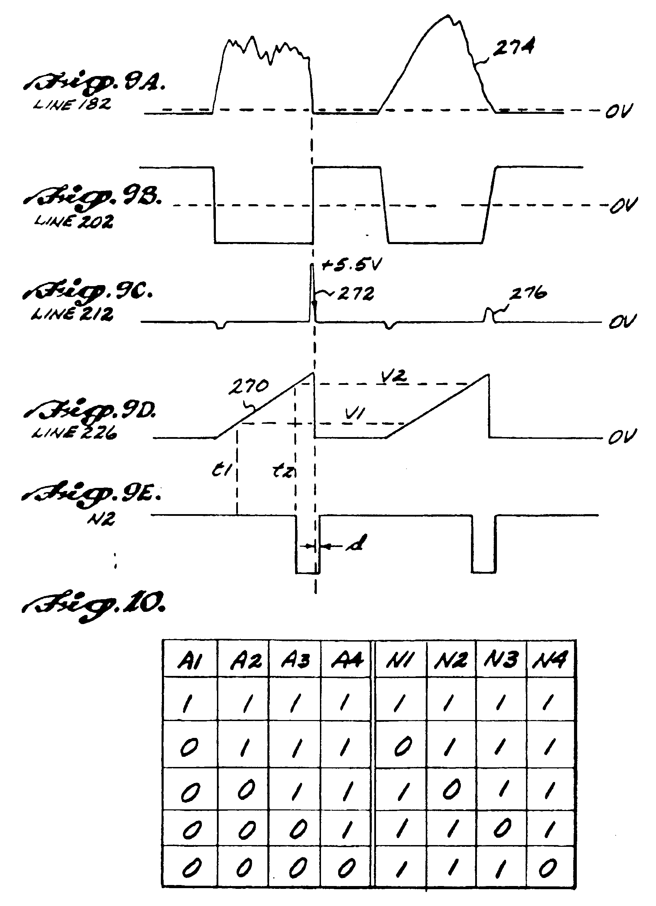

The geometry of beam 82 and focal spot 84 is illustrated in greater detail in FIGURES 5 and 6. In these FIGURES, a coordinate system is used in which the Z axis defines the longitudinal axis of beam 82, and in which the X and Y axes define the beam cross section. As illustrated, beam 82 has a comparatively large cross section in the Y direction and a comparatively small cross section in the X direction. At focal spot 84, the cross section of the beam is as illustrated in FIGURE 6, with the focal spot having dimensions corresponding to that of light emitting area 140 of laser diode 100, i.e., a diameter along the X axis of approximately 2 microns and a diameter along the Y axis of approximately 0.7 microns. The direction of movement of focal spot 84 due to the vibration of lens system 102 is in the Y direction, i.e., normal to the long cross-sectional axis of the beam and to the flow direction indicated by arrow 16. In the coordinate system shown in FIGURES 5 and 6, lens 104 and photodetector 106 are located in the X-Z plane.

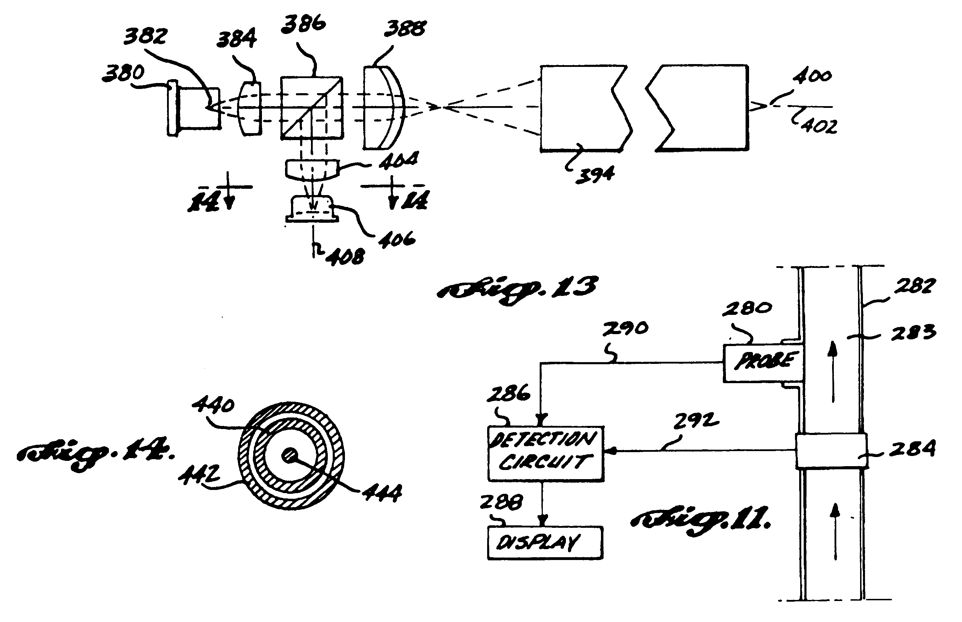

Electronics package 52 (FIGURE 1) contains a conventional drive circuit for laser diode 100, and a preamplifier for amplifying the output signal of photodiode 106. A suitable preamplifier circuit is illustrated in FIGURE 7. The preamplifier comprises photodiode 106 and dual gate gallium arsenide field effect transistor (GaAsFET) 170. GaAsFET 170 includes gates $G_1$ and $G_2$, drain D and source S. The output of the preamplifier is taken from drain D through capacitor 172 and amplifier 181 into signal line 182 of coaxial cable 86. Gate $G_2$ and source S of GaAsFET 170 are connected to ground potential. The cathode of photodiode 106 is connected to positive voltage supply $V_+$, and the anode of the photodiode is connected to gate $G_1$ via node 174. Node 174 is connected to negative voltage supply $V_-$ via resistor 176, and to drain D via resistor 178. Drain D is connected to positive voltage supply $V_+$ via resistor 180. In the preamplifier in FIGURE 7, photodiode 106 is reverse biased, the photocurrent through the photodiode being opposite to the conduction current. Without reverse biasing, the response speed of the photodiode would be slow, due to the high capacity at the diode junction. With a reverse bias, the photodiode capacitance is reduced, and the response speed is correspondingly increased. A suitable component for GaAsFET 170 is the MRF 966 N channel GaAsFET available from Motorola.

The grounding of gate $G_2$ and source S results in a high separation between the input and output stages, i. e., very little feedback and high signal-to-noise ratio. The interface circuit comprising resistors 176 and 178 provides a relatively high input impedance, to provide a good impedance match between photodiode 106 and GaAsFET 170. Resistors 176 and 178 are selected such that node 174 is maintained at a potential of approximately -1.8 to -2.2 volts. When the current through photodiode 106 goes up in response to the receipt of illumination, the voltage at gate $G_1$ goes up, and the voltage at drain D goes down. The latter voltage is fed back via resistor 178, and maintains the voltage at gate $G_1$ nearly constant at about minus 2 volts, producing a high signal-to-noise ratio. In some applications, it may be desirable to use two GaAsFETs in series to provide a larger degree of amplification of the photodetector signal.

Photodiode 106 detects light, via lens 104, whenever focal spot 84 sweeps past a particle in fluent medium 12, and/or whenever a particle flows through the focal spot, such that the particle scatters some of the light of beam 82 back towards lens 104. At a velocity of two meters per second, a one micron particle will traverse a one micron focal spot in one microsecond. The corresponding backscattered signal will therefore go from zero (or ambient) to its maximum value in a time period on the order of 0.4 microseconds. The preamplifier must be able to respond to such a pulse, and therefore it should be linear up to about two megahertz. Because this frequency is in the broadcast range, the preamplifier circuit should be shielded and located within probe 10 adjacent to the photodetector. The preamplifier circuit is followed by a conventional operational amplifier 181 with a transistor drive circuit to feed the output signal into a 50 ohm coaxial cable 86. A suitable cable is type RG 58 A/U or equivalent. Using such a cable, the output signal from the preamplifier can be transferred over a distance of 100 feet or more into the input of the detection circuit, which may therefore be located in a separate enclosure.

The present invention takes advantage of the way in which the beam is emitted from the laser diode. Referring to FIGURE 5, the beam spreads at a full angle of about 33 degrees in the Y-Z plane and about 11 degrees in the X-Z plane. The beam is focused to focal spot 84 at the same angle. The beam intensity decreases rapidly at increasing distance from the focal spot 84, because of the large divergence of the beam. Thus, particles which pass through the beam 82 in front of or behind the focal spot 84 will not scatter the full intensity of the beam as rapidly as particles which pass through the focal spot. The rate-of-increase or "rise-time" of the signal at photodiode 106 in FIGURE 3 may therefore be used as a criterion for selecting which particles have passed through the focal spot.

The large solid angle of beam 120 also increases the overall signal-to-noise ratio, because of the diminished beam intensity even at small distances from the focal spot. The large divergence and corresponding convergence angle can be achieved with other laser types only by utilizing bulky and expensive beam expanders and focusing optics. The laser diode can radiate as much or more power as conventional helium-neon lasers (typically 5 milliwatts continuous), and the beam can be expanded and refocused with simple and inexpensive optics, concentrating the full power available at the focal spot. It should be noted that this method can only be used in a backscattering geometry, or else the fluent medium must be forced through a very small passage through which only a few particles could pass at the same time, which would severely limit the usefulness of the device as described above.

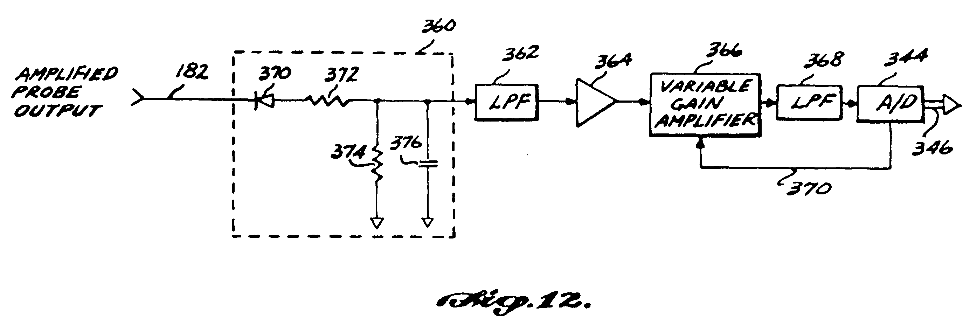

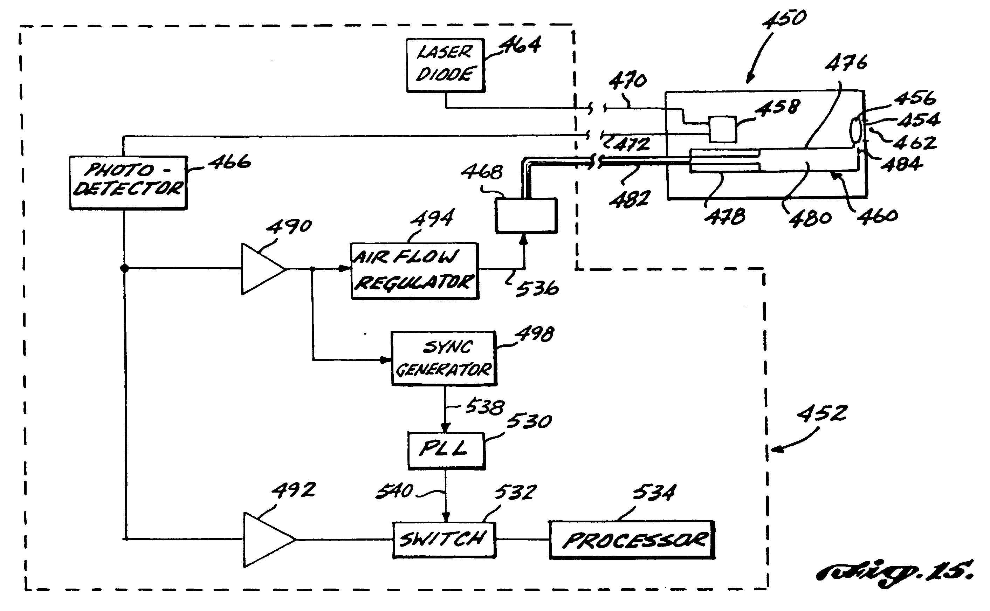

A preferred embodiment of the detection circuit of the present invention is described in FIGURES 8-10. In general, the detection circuit analyzes the pulses produced by the photodiode and preamplifier when the focal spot sweeps past a particle in the fluent medium, or when a particle flows through the focal spot. The illustrated detection circuit classifies the particles into four size categories, counts the particles in each size category, and discriminates against particles that produce pulses with rise times above (i.e., slower than) a predetermined threshold. Any number of size categories may of course be used. The amplified signal from photodetector 106 is received by the detection circuit via line 182 of coaxial cable 86. The signal on line 182 is input to high gain amplifier 200, amplifier 200 preferably having a slew rate on the order of 70 volts/microsecond. The high slew rate of amplifier 200 permits it to track changes in the level of the signal on line 182 without modifying or degrading the signal rise time. The output of amplifier 200 on line 202 is input to ramp circuit 204 and differentiator 206. Typical signals on lines 182 and 202 are illustrated in FIGURES 9A and 9B respectively. Amplifier 200 is biased such that with no input signal, the amplifier output is high, while a positive-going input signal drives the amplifier low. FIGURES 9A and 9B illustrate that amplifier 200 effectively removes noise from the input signal by digitizing the signal, and further illustrates that the rate at which the signal on line 202 changes state is a function of the rise time of the input signal on line 182. Where the context permits, use of the phrase "rise time" herein should be understood to include both the rise time and the fall time of a signal.

Differentiator 206 produces an output signal on line 208 that has an amplitude corresponding to the first derivative of the signal on line 202. The differentiated signal on line 208 is input to limiter 210. Limiter 210 clips the signal on line 208, so as to limit it to +5.5 volts in a positive direction and -0.5 volts in a negative direction, and produces a dipped and differentiated output signal on line 212 that is illustrated in FIGURE 9C. The negative-going portions of the signal on line 202 produce small negative pulses on line 212 due to the action limiter 210. However the positive-going portions of the signal on line 202 produce positive pulses on line 212 that up to 5.5 volts have amplitudes proportional to the rise times of the input signal on line 202, and to the fall times of the signal on line 182 (FIGURE 9A). The function of the signal on line 212 is described in greater detail below.

Ramp circuit 204 comprises transistors 214 and 216, capacitor 218, resistors 220 and 222, and temperature compensation circuit 224. Transistors 214 and 216 are connected in series between positive voltage supply $V_+$ and ground. The signal on line 202 is input to the base of transistor 214 via resistor 220. The collector of transistor 214 is connected to capacitor 218, and also forms the output of ramp circuit 204 on line 226. When the signal on line 202 is high, transistor 214 conducts and maintains capacitor 218 in a discharged state. The voltage on line 226 is therefore low at this time. However, when the voltage on line 202 goes negative, transistor 214 stops conducting, and capacitor 218 charges via transistor 216 and 222. The resulting ramp signal on line 226 is shown in FIGURE 9D. The rate of charging of capacitor 218 depends upon the voltage provided by temperature compensation circuit 224 at the base of transistor 216. The temperature compensation circuit may therefore be adapted to provide a constant charging rate over the operating temperature of the detection circuit.

The ramp signal on line 226 (FIGURE 9D) and the limited derivative signal on line 212 (FIGURE 9C) are used to control the operation of a counting circuit that comprises operational amplifiers 230-233, exclusive NOR gates 244-247, counters 250-253, latches 254-257 and clock circuit 260. The ramp signal on line 226 is connected to the inverting input of each of operational amplifiers 230-233. The noninverting inputs of the operational amplifiers are connected to a resistance ladder comprising resistors 234-238 connected between positive voltage supply $V_{++}$ (e.g., 12 volts) and ground, the resistance ladder providing voltages V1 through V4 as shown in FIGURE 8. The outputs of operational amplifiers 230-233 (A1-A4) are connected to positive voltage supply $V_+$ (e.g., 5 volts) through resistors 240-243 respectively, and to one of the inputs of exclusive NOR gates 244-247 respectively. The second inputs of the exclusive NOR gates are derived as shown from the outputs of the adjacent operational amplifiers, with the second input of exclusive NOR gate 247 being tied to positive voltage supply $V_+$. The outputs of exclusive NOR gates 244-247 (N1-N4) are input to counters 250-253 respectively. Each counter is a 16-bit counter, and the outputs of the counters may be transferred to latches 254-257 by appropriate reset and enable signals provided by clock circuit 260 on lines 262 and 264 respectively.

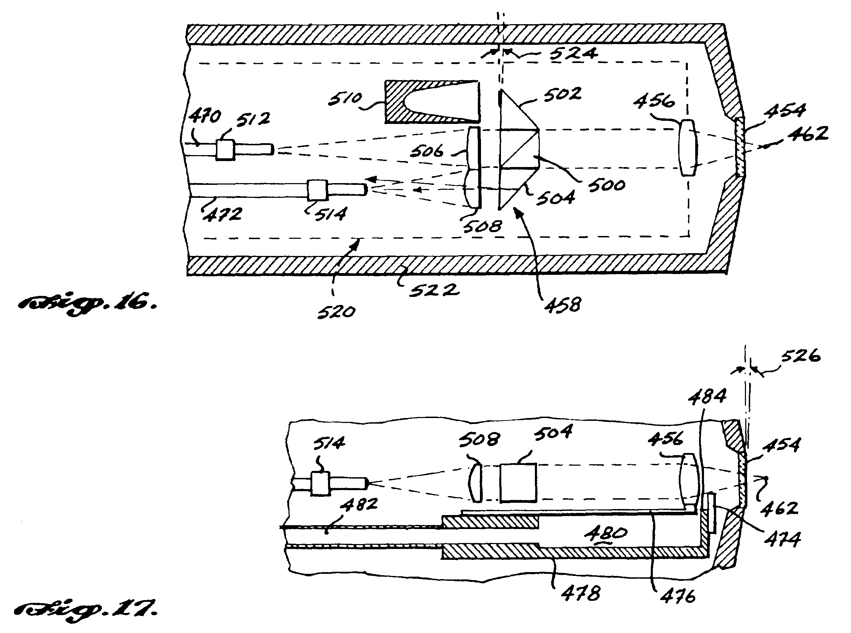

The operation of the counting circuit illustrated in FIGURE 8 can be illustrated with reference to the signal diagram of FIGURE 9 and the logic diagram set forth in FIGURE 10. In FIGURE 10, the columns labeled A1-A4 represent the outputs of amplifiers 230-233 respectively, with 1 standing for a high output voltage and 0 standing for a low output voltage. Similarly, the columns labeled N1-N4 correspond to the outputs of exclusive NOR gates 244-247 respectively. Referring to FIGURE 9D, voltage ramp 270 begins when the signal on line 202 (FIGURE 9B) goes low and capacitor 218 begins to charge. Initially, the voltage on line 226 is lower than all of the voltages (V1 through V4) provided at the noninverting inputs of amplifiers 230-233. Thus, the outputs A1-A4 of all amplifiers are high, as reflected in the first row of FIGURE 10. Similarly, each exclusive NOR gate 244-247 has high signals at both of its inputs, and the outputs of all of the exclusive NOR gates N1-N4 are high, again as indicated in the first row of FIGURE 10. As the voltage on line 226 rises, a point is reached on ramp 270, at time $t_1$, at which the voltage on line 226 exceeds the voltage V1 at the noninverting input of amplifier 230. The output of amplifier 230 (A1) therefore goes low, and as a result the output of exclusive NOR gate 244 (N1) also goes low, as illustrated in the second row of Figure 10. At time $t_2$, the voltage on line 226 exceeds the voltage V2 at the noninverting input of amplifier 231. The output of amplifier 231 (A2) therefore goes low, forcing the output of exclusive NOR gate 245 (N2) to go low and the output of exclusive NOR gate 244 (N1) to go high, as illustrated in the third row of FIGURE 10. Continued increase of the voltage on line 226 (not illustrated in FIGURE 9D) would result in the signals in rows 4 and 5 of FIGURE 10, when ramp 270 exceeds voltages V3 and V4 respectively.

Voltage ramp 270 continues until the signal on line 202 (FIGURE 9B) goes high, a high signal on line 202 resulting in the rapid discharge of capacitor 218 through transistor 214. The positive-going signal on line 202 also results in a positive voltage pulse on line 212 (FIGURE 9C). The signal on line 212 is connected to the enable input of each of counters 250-253. These counters are adapted to respond to a negative-going enable pulse, provided that the enable pulse voltage was initially greater than 4.5 volts. Thus, in the case of pulse 272 (FIGURE 9C), the pulse height is initially above the 4.5 volt threshold, and as a result, the negative-going edge of pulse 272 enables counters 250-253 to receive the signals supplied by exclusive NOR gates 244-247 respectively. Because signals N1, N3 and N4 are high when enable pulse 272 occurs, counters 250, 252 and 253 do not register any counts in response to the enable pulse. However, a count is registered by counter 251 due to the low N2 signal from exclusive NOR gate 245. The N2 signal is illustrated in FIGURE 9E. Because of the longer signal path between line 202 and the output of exclusive NOR gate 245, the N2 signal remains low for a short period of time d after the occurrence of pulse 272, thus ensuring that counter 251 registers a count.

After counters 250, 253 have been permitted to accumulate counts for a predetermined period of time, the contents of the counters may be transferred to latches 254-257 by means of an enable signal on line 264. The counters are then reset to zero by a reset signal on line 262, and the process is repeated. Thus at the time that the counter contents are transferred, each latch contains a number corresponding to the number of particles counted in a given size range, the size ranges being defined by voltages V1-V4. The latches may be used to drive display devices, or to transfer the count data to a data storage system or to a process control system.

An important aspect of the present invention is that particles that pass through the light beam too far from the focal spot are not counted. Discrimination against such particles is provided by requiring that enable pulse 272 exceed a predetermined level, for example 2.5 volts. FIGURE 9A illustrates pulse 274 resulting from a particle that partially occluded the light beam but that was not contained in the volume through which the focal spot was scanned. As illustrated in FIGURE 9C, the slow rise time of pulse 274 results in enable pulse 276 that has an amplitude less than the 2.5 volt threshold. Pulse 274 is therefore ineffective to enable counters 250-253. Consequently, no count is registered for pulse 274, and the required screening of out-of-focus particles is accomplished. It is important to note that the high gain of amplifier 200 coupled with the rise time discrimination provided by differentiator 206 provides a detection circuit that does not depend upon the amplitude of the pulses from the photodiode and preamplifier, but rather on their rise times. The rise time sensitivity of the detection circuit is determined by the time constant of differentiator 206. the differentiator is implemented by a simple RC circuit, suitable values for the resistor and capacitor are 33 picofarads and 2.2 kilohms, respectively, giving a time constant of 73 nanoseconds. If amplifier 200 has a slew rate of 70 volts/microseconds, the amplifier output will go from +10 volts to -10 volts in about 285 nanoseconds, a change that is comparable to charging the differentiator capacitor to 5 volts in 75 nanoseconds. Thus, the detection circuit counts only those pulses that are fast enough to drive amplifier near its maximum slew rate.

It should be noted that the system described above may be modified to use any number of size categories, and that digital signal processing methods may be used to obtain the rise time and pulse length values. High-speed microprocessing circuits may be used to provide distinct length, amplitude and rise time values for each pulse received, allowing a continuous distribution of all particle sizes to be obtained, rather than a fixed number of size categories.

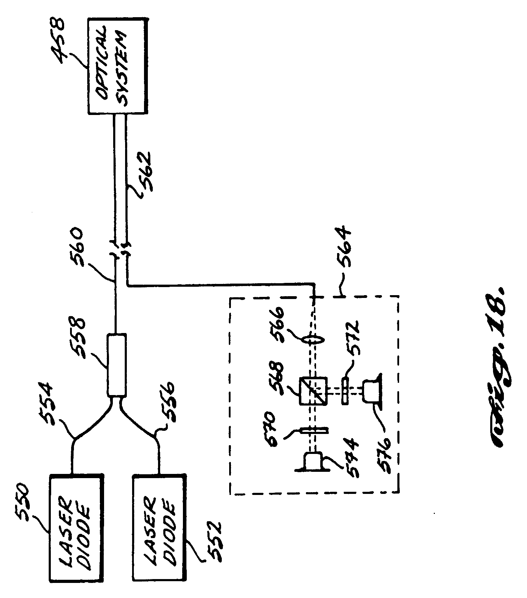

For some applications, the fluent medium containing the particles to be analyzed will flow at a continuous rate past the point at which the particle sizes and concentrations are to be measured. In such a case, it may not be necessary to scan the focal spot, and particle analysis can proceed by means of a fixed probe and focal spot past which the fluent medium flows. In some cases, the flow rate of the fluent medium will be fixed, in which case such fixed rate can be taken into account in the calibration of the detection circuit. However, when the flow rate of the fluent medium is variable, and where it is desired to determine particle size as well as particle count, then it will generally be necessary to either utilize a flow regulation device to produce a fixed rate of flow past the probe, or to measure the flow rate and take the measured flow rate into account in the detection circuit. The latter situation is illustrated in FIGURE 11. In this FIGURE, probe 280 is used to measure particle sizes and numbers in pipe 282 through which fluent medium 283 is flowing in the direction indicated by the arrows. Flow meter 284 is interposed in pipe 282, and produces a flow rate signal on line 292. The system shown in FIGURE 11 further includes detection circuit 286 and display 288. The detection circuit receives the signal provided by probe 280 on line 290, and is also connected to receive the flow signal on line 292. The detection circuit may be similar to the circuit shown in FIGURE 8. In such a case, the detection circuit would utilize the flow signal on line 292 to alter the time constant of differentiator 206, and also to modify the slope of the ramp produced by ramp circuit 204. The resulting particle sizes and counts could then be displayed by display 288.

In the case where it is not desired to utilize a flow meter, a mechanism may be utilized to produce a constant flow of the fluent medium past the probe. In the case of powdered materials carried in gas, the mechanism may simply comprise a venturi pipe adjacent to the optical window, with air driven dry-air jets that blow the particles past the window. In general, where focal spot scanning is not used, it will be necessary that the flow velocity of the fluent medium be high enough to provide the required counting rates.

The present invention is capable of producing accurate measurements of particle size over a very wide range of particle concentrations, i.e., from .01 percent to greater than 20 percent by volume. However, the distance from the window to the focal spot is important to the accuracy of the system. If the focal spot is too far inside the fluent medium then the partides between the window and the spot may collectively scatter too much of the beam, leaving little of the light energy to be focused (as in the transmission geometries). If the focal point is too close to the window, then the probability of the beam illuminating a particle becomes small, slowing the acquisition of data to unacceptable levels.

It has been discovered that the optimum accuracy in the counting and sizing of particles is achieved by adjusting the distance from the window to the focal spot such that the integrated amplitude is maximized. The integrated amplitude is the average amplitude of the signal on line 182 of FIGURE 8. Thus, with reference to FIGURE 9A, the integrated amplitude is the integrated average, over all of the pulses appearing on line 182, of the pulse amplitude times the pulse width. The signal on line 182 can be sent to a suitable integrated amplitude circuit, described below, which can produce an indication or signal proportional to the integrated amplitude. Referring to FIGURE 1, such a signal can be used with a suitable servo loop to control the stepper motor 80/positioner 76 to automatically adjust the position of the optical assembly 50, and thus the distance between the focal spot and the window, so that the maximum integrated amplitude is achieved. Alternatively, an indication of the integrated amplitude may be used to manually adjust the position of the focal spot.

A suitable embodiment for an integrated amplitude circuit is shown in FIGURE 12. The integrated amplitude circuit comprises interface circuit 360, low pass filter 362, amplifier 364, variable gain amplifier 366 and low pass filter 368. The preamplified probe output signal on line 182 (FIGURE 8) is conveyed to interface circuit 360. The interface circuit comprises diode 370, resistors 372 and 374, and capacitor 376. The interface circuit converts the probe output signal into a properly balanced DC output. The signal produced by the interface circuit is filtered by low pass filter 372, amplified by amplifier 364, and then input to variable gain amplifier 366. The output of the variable gain amplifier passes through a second low pass filter 368, and is then input to A/D 344. A/D 344 controls the gain of amplifier 366 via a feedback signal on line 370, in a manner well known to those skilled in the art, in order to maximize dynamic range. The digital integrated amplitude signal produced by A/D 344 on bus 346 is then input to a servo system, as described above, to control the position of the focal spot.

In many applications there will be a "halo" of light surrounding the focal spot in the fluent medium, caused by secondary and higher order light scattering from particles in the vicinity of the focal spot. Referring to the Lambert-Beer law of light propagation through a fluent medium with suspended particles, the light intensity $I_t$ at distance x from the light source is given by:

$$I_t = I_o e^{-nCkx} \qquad (1)$$

where $I_o$ is the intensity at the source, n is the number of particles, C is the optical cross section of the particles, and k is the absorption coefficient. In the case of backscattered light, the distance x from the source will be different for off-axis detection points, i.e., for light from the halo surrounding the focal spot. The light received by such detectors is then proportional to the product nCk in the equation (1) above. Since k is constant for a given material and C is directly related to the size of the particles, n can be determined and used as a measure of volumetric concentration. Photodiode 108 in FIGURE 3 measures the light scattered from areas not included in focal spot 84, and so measures light from the "halo" that has traveled a different distance from the source as has the light received by photodiode 106 from the focal spot. Thus the ratio of the signals from 108 and 106 is a measure of the number n of the particles in the fluent medium.

FIGURE 13 illustrates an embodiment in which a common optical path is used for the illumination and backscattered light. The embodiment of FIGURE 13 inc10des laser diode 380, collimating lens 384, beamsplitter 386 and focusing lens 388. The beam emitted from light emitting area 382 of laser diode 380 is collimated by lens 384, passes through beamsplitter 386 and lens 388 into optical conveyance system that may comprise a periscope (optical relay) system, or a fiber optic system. The optical conveyance system projects the illumination light along axis 402, and focuses the illumination light at focal spot 400 in the fluent medium. Light is backscattered from focal spot 400, passes through optical conveyance system 394 to the beamsplitter, and is reflected by the beamsplitter towards lens 404 that focuses the backscattered light onto photodiode 406. It will be noted that the focal plane perpendicular to axis 402 at focal spot 400 will be mapped onto a plane at photodetector 406 normal to the axis 408 of the light beam traveling from the beamsplitter to the photodetector. However, the illumination at photodetector 406 will remain stationary, even as focal point 400 is scanned. In one preferred arrangement, photodetector 406 is a multisectored photodetector adapted to measure not only the scattered light at the center of the beam, but also the off-axis light that is the result of the halo effect.

The configuration of the multisectored photodetector can vary, depending upon what additional information is to be collected. One suitable configuration is shown in FIGURE 14. Photodetector 406 consists of two concentric photodetector rings 440 and 442 surrounding centrally located high-speed detector 444 onto which the center of the beam (i.e., the light backscattered by the focal spot) is focused. Centrally located detector 444 is small enough in size to have a high-speed response time, but large enough to capture all of the scattered light from the focal spot 400. The signal from this photodetector is used to analyze the light scattered from individual particles, as described above. Photodetector rings 440 and 442 are larger in size, and pick up light scattered from portions of the halo. The signals produced by these photodetectors are thus largely an average voltage or DC level, and the ratio of the signal produced by photodetector ring 440 to the signal produced by photodetector ring 442 can be used to measure the concentration of particles in the fluent medium.

The present invention provides a particle analysis technique that may be used for on-line applications in process flow and in process vessels. However there are difficulties in using electrical components in areas with high temperatures, and in areas with potentially combustible or explosive environments. For example, laser diodes do not operate in temperatures above about 50°C. Furthermore, in explosive environments, such as environments with combustible solvents, a probe or sensor should be intrinsically safe or at least explosion-proof. An explosion-proof probe is constructed in such a way that it cannot cause or contribute to an explosion, i.e., it is housed in an explosion-proof enclosure. An intrinsically safe probe is a probe that does not use electrical signals or components, and that is otherwise constructed such that it cannot cause or contribute to an explosion. Thus, an intrinsically safe probe need not go through an extensive process to obtain "explosion-proof" certification.

An intrinsically safe particle counting system according to the present invention is shown in FIGURES 15-18. Referring to FIGURE 15, this system includes probe 450 and controller 452. Probe 450 is the component of the system that is located at the monitoring site, and is implemented using optical and pneumatic components only. The probe includes window 454, lens 456, optical system 458 and pneumatic oscillator 460. Controller 452 is located remotely with respect to probe 450, and includes laser diode 464, photodetector 466, pneumatic controller 468, and other components described below. Laser diode 464 is coupled to optical system 458 of probe 450 via monomode fiber-optic cable 470, photodetector 466 is coupled to the optical system via multimode fiber-optic cable 472, and pneumatic controller 468 is coupled to the probe via air line 482. Laser diode 464 may include a conventional monomode fiber pigtail that is spliced directly to monomode cable 470. Laser diode 464 produces a single mode optical signal on fiber-optic cable 470 that is received by optical system 458, and formed by the optical system into a beam suitable for transmission to the focal spot 462 via lens 456. In a similar manner, the optical system receives light reflected from the focal spot via lens 456, and couples the light into fiber-optic cable 472 for return to controller 452.

Lens 456 is mounted to one end of leaf spring 476, the other end of the leaf spring being fastened to base 478. Base 478 includes cavity 480, and the leaf spring is positioned such that the leaf spring when undeflected just closes the cavity at lip 484, and such that lens 456 and the end of the leaf spring to which it is attached can vibrate up and down without contacting lip 484. Pressurized air is supplied to cavity 480 via air line 482. In response to the air pressure, leaf spring 476 flexes upward, thereby providing a gap between the end of the leaf spring under lens 456 and lip 484. This gap permits air to escape from the cavity, thus reducing the air pressure in the cavity. Continuation of this process leads to vibration of leaf spring 476 and lens 456, at a resonant frequency that depends on the length and thickness of the leaf spring, and on the mass of lens 456. These parameters may be chosen to produce a suitable scanning frequency, e.g., 400 Hz, with the pressure of air in air line 482 controlling the vibration amplitude. In other suitable pneumatic systems, the air flow or pressure in air line 482 may be used to control the scanning frequency.

The volume of cavity 480 may be varied to increase drive efficiency, and an air flow restrictor may be used to limit the air flow during the upper portions of the vibration of the leaf spring. For some applications, air line 482 will itself serve as a suitable air flow restrictor. It will of course be understood that the pneumatic oscillation system shown in FIGURE 15 will not be necessary for those applications in which the particles flow past the probe with suitable velocities.

Further details of probe 450 are shown in FIGURES 16 and 17. As illustrated, optical system 458 includes beamsplitter 500, prisms 502 and 504, lenses 506 and 508, and black body cavity 510. Fiber-optic cable 470 includes termination 512 that is positioned at the focal point of lens 506, such that light exiting from fiber-optic cable 470 strikes and is collimated by lens 506. Termination 514 of fiber-optic cable 472 is positioned at the focal point of lens 508, such that collimated light passing from right to left through lens 508 is focused into fiber-optic cable 472. The optical system, lens 456 and terminations 512 and 514 are mounted within a housing, schematically illustrated by phantom line 520, that in turn is mounted within probe body 522. Preferably, housing 520 is pneumatically movable in a longitudinal direction to adjust the position of focal spot 462 with respect to window 454.

In operation, light from fiber-optic cable 470 is collimated by lens 506 and impinges on beamsplitter 500. A portion of the incident illumination passes through the beamsplitter to lens 456, and is focused onto focal spot 462. The remainder of the incident illumination is reflected by beamsplitter 500 into black body cavity 510 via prism 502. Light returning from focal spot 462 passes via lens 456 and beamsplitter 500 to prism 504 where it is reflected into fiber-optic cable 472 via lens 508. As shown in FIGURE 16, beamsplitter 500 and prisms 502 and 504 are offset by a small angle 524 from the optical axis of lens 456, to prevent any reflections from black body cavity 510 from entering fiber-optic cable 472. Similarly, as shown in FIGURE 17, window 454 is offset by a small angle 526 from the optical axis of lens 456, to prevent reflections from window 454 from entering fiber-optic cable 472.

The principle of operation of the embodiment of FIGURES 15-18 is that light exiting from the end of single mode fiber-optic cable 470 produces a radiation pattern of spherical waves that appear to be coming from a virtual point source a few microns back from the end face of the fiber. Fiber-optic cable 470 can therefore act as a very compact illumination source, in a manner similar to that for the laser diode itself in previously described embodiments. Thus as with prior embodiments, the embodiment of FIGURES 15-17 is capable of producing focal spot 462 of very small size. Termination 512 is positioned such that the virtual point source is at the exact focal point of lens 506. In principle, it would be possible to use a single fiber-optic cable to transmit light to and from probe 450. However the advantage of the arrangement described above is that reflections caused by splices in the optical path between laser diode 464 and beamsplitter 500 are not coupled into fiber-optic cable 472, and do not produce a DC signal level at photodetector 466. This is an important consideration, because the noise level of a receiving diode goes up with the DC current. Other techniques to minimize the amount of light entering fiber-optic cable 472 from sources other than focal spot 462 are the angular deflections 524 and 526 described above, the use of black body cavity 510, and the use of suitable antireflection coatings on the lenses, beamsplitter and prisms that comprise the optical system.

Use of a multimode cable for fiber-optic cable 472 permits a larger amount of reflected light to be coupled into the fiber-optic cable. The reason for this is that compared to single mode cables, multimode cables have larger core diameters and larger numerical apertures. Furthermore, maintenance of a high degree of spatial coherence is not required for the return optical signal, because of the comparatively large receiving area of photodetector 466. The focal length selected for lens 508 is a tradeoff between competing considerations. A diffraction limited lens of long focal length will produce a larger focal spot than a lens having a short focal length with the same aperture. However, only that portion of the light from lens 508 that falls within the numerical aperture of fiber-optic cable 472 will be coupled into the fiber-optic cable. Thus if lens 508 has a short focal length, it will produce a smaller beam spot at the end of fiber-optic cable 472, but some of the light may be outside of the numerical aperture of the fiber-optic cable. If lens 508 has a long focal length, then it will produce a larger beam spot at the end of fiber-optic cable 472, and a portion of the beam spot may fall on the cladding rather than on the core of the fiber-optic cable. In practice, focal lengths in the range of 10-25 millimeters have been found most suitable.

In addition to the laser diode 464, photodetector 466 and pneumatic controller 468, controller 452 includes amplifiers 490 and 492, airflow regulator 494, sync generator 498, phase lock loop 530, switch 532 and processor 534. Amplifier 490, airflow regulator 494 and pneumatic controller 468 are used to regulate the airflow in air line 482. Amplifier 492 and switch 532 are used to couple the output of photodetector 466 to processor 534. Amplifier 492 may be implemented in a manner identical to the preamplifier shown in FIGURE 7, and processor 534 may be similar or identical to the processor shown in FIGURE 8. The purpose of sync generator 498, phase lock loop 530 and switch 532, and the operation of the airflow control path, are described below.

To accurately determine particle size, the speed with which focal spot 462 scans through the fluent medium must be known or suitably estimated. As previously described, this may be accomplished by counting particles only during the relatively constant velocity portions of the oscillation of the focal spot. In particular, taking the focal spot motion to be represented by a sine wave, the detection signal may only be processed during those portions of each oscillation in which the phase is in the range 315°-45° and 135°-225°. With the previously described embodiments in which the focal spot oscillation was produced by applying a suitable electrical control signal, synchronizing the focal spot oscillation to the particle counting operation is straightforward. However, in the embodiment of FIGURES 15-17, means must be provided to synchronize the operations of processor 534 to the oscillations produced by pneumatic oscillator 460.

To achieve such synchronization, a small reflector 474 (FIGURE 17) is positioned adjacent to lip 484 of base 478. Reflector 474 is positioned such that during the downward excursion of lens 456, the reflector intercepts and reflects a portion of the light passing through lens 456. The reflector is selected such that these reflections produce optical pulses that are significantly larger than the pulses produced by individual particles in the fluent medium. As a result, as the amplitude of vibration of lens 456 increases, the amplitudes of the pulses produced by reflector 474 also increase. These pulses are converted to electrical pulses by photodetector 466, and the corresponding electrical pulses are amplified by amplifier 490 and input to airflow regulator 494 and sync generator 498.

The airflow regulator responds by adjusting the control signal on line 536 to achieve a predetermined oscillation amplitude.

Sync generator 498 receives the signal produced by amplifier 490, and produces a series of sync pulses on line 538 that are input to phase lock loop 530. The sync pulses correspond to the points in time of maximum downward travel of lens 456. By way of example, sync generator 498 may comprise a limiter to screen out the smaller pulses produced by particle reflection, a differentiator to differentiate the reflector pulses produced at the output of the limiter, and a rectifier to rectify the differentiator output pulses, to thereby produce sync pulses having leading edges that exactly correspond to the turn around point in the motion of lens 456. The frequency of the sync signal on line 538 corresponds to the frequency of vibration of lens 456. Phase lock loop 530 locks onto this signal, to produce the square wave (50% duty cycle) signal on line 540 that controls switch 532. The sync pulses on line 538 occur at phase angles of 90°. PLL 530 therefore includes a phase shifting circuit to shift its output on line 540 by 45°. Switch 532 is therefore closed during the appropriate phase ranges (315°-45° and 135°-225°), to synchronize the counting operation to the focal spot oscillation.

In the embodiments described to this point, only the width and rise time of the pulses produced by partides at the focal spot have been utilized. However, the amplitudes of the pulses are a function of the physical characteristics of the particles other than their size, for example, particle shape, refractive index of the particle, color, and chemical make-up. Thus useful additional information can be obtained by analyzing pulse amplitude, and in particular, analyzing the amplitude of pulses reflected at two or more different wavelengths. An embodiment for obtaining such additional information is illustrated in FIGURE 18. This embodiment includes laser diodes 550 and 552, coupler 558, and two wavelength detector 564. Laser diodes 550 and 552 produce light at two different wavelengths on single mode fiber optic cables 554 and 556, respectively, and this light is combined by coupler 558 onto single mode fiber optic cable 560. Suitable single mode fiber optic couplers include those in the 945 series available from Amphenol. As in the previous embodiment, the optical signal on single mode cable 560 is input to optical system 458, which in turn produces a return signal on multimode cable 562.

Detector 564 includes collimating lens 566, beamsplitter 568, interference filters 570 and 572, and photodetectors 574 and 576. Lens 566 collimates the light exiting from multimode fiber optic cable 562, and the collimated light is divided by beamsplitter 568 into first and second beams. The first beam is passed through interference filter 570 that passes only light from laser diode 550 to photodetector 574. The second beam produced by the beamsplitter passes through interference filter 572 that passes only that light produced by laser diode 552 to photodetector 576. Thus each photodetector measures only the backscattered light in a particular wavelength range. By taking the sum and difference of the light from the two photodetectors at the same time, one can gain valuable additional analytical information about the specific particles at the focal spot.

While the preferred embodiments of the invention have been illustrated and described, variations will be apparent to those skilled in the art. Accordingly, the invention is not limited to the described embodiments, and the scope of the invention is to be determined by reference to the following claims.

**Claims**

1. An apparatus for analyzing particles contained in a fluid medium, the apparatus comprising:

   illumination means compising an optical source (100) and an optical system (104) arranged to receive light from the optical source and focus a beam (82) of the light to the focal spot (84) in the fluid medium;
   photodetector means (106) arranged to detect light pulses due to the interception of said light beam by said particles and to produce a corresponding electrical signal, and
   detection means connected to receive the electrical signal, the detection means including size measurement means (204,A1-A4,234-238, 244-247) arranged to measure the periods of time that individual particles are illuminated by said light beam to derive from said periods and the velocity of the fluid medium relative to the focal spot an indication corresponding to the size of the particles;

   characterized in that said photodetector means (106) is arranged to detect backscattered light pulses from said particles, at particle concentrations from 0.01% to greater than 20% by volume of the fluid medium, through a single optical access window (30), and through which window both the light from the illumination means and the backscattered light pulses to the photodetector pass and in that the illumination means includes means (76,80) for adjusting the distance between the focal spot and window.

2. An apparatus according to claim 1 further characterised in that said photodetector means and detection means are responsive to backscattered light from particles which intercept the light beam (82) at the focal spot (84) and discriminate against backscattered light from particles which intercept the beam in front of or behind the focal spot and partially occlude said light beam.

3. An apparatus according to claim 2 further characterised in that said detection means includes discrimination means (206) which is arranged to discriminate against pulses in said electrical signal having a rise time or fall time above a predetermined threshold, such electrical signal pulses corresponding to backscattered light pulses from particles in front of or behind said focal spot.

4. An apparatus according to claim 2 or claim 3 further characterised in that said photodetector means (106) is focused on said focal spot.

5. An apparatus according to any preceding claim, wherein said optical source is a laser diode (100) and said optical system is arranged to form an image of the radiating area of the laser diode at said focal spot (84), the focal spot having dimensions comparable to those of said radiating area.

6. An apparatus according to any preceding claim, in the form of a housing (20) having a window (30) in its outer wall, further characterised in that said illumination means is arranged to direct said beam (82) through said window to a focal spot (84) located outside said window.

7. An apparatus according to claim 6 further characterised in that the detection means includes means (360-368) for producing an integrated amplitude signal having a magnitude corresponding to the average amplitude of the electrical signal, and wherein said means (76,80) for adjusting the distance between the focal spot (84) and the window (30) is such as to enable the integrated signal amplitude to be maximised.

8. An apparatus according to any preceding claim, further comprising scanning means (112) for scanning the focal spot (84) through the fluid medium.

9. An apparatus according to claim 8 as dependent on claim 6 or claim 7 wherein said scanning means (112) is arranged to scan the focal spot in a direction parallel to said window (30).

10. An apparatus according to claim 1, wherein said optical source (380) and said photodetector means (406) are arranged to scan the fluid medium so that light from the optical source and light pulses detected by the photodetector means respectively travel to and from the scanned focal spot (400) along a common optical path.

11. An apparatus according to any preceding claim wherein backscattered light from said focal spot (84) is collected by said optical system (450) and directed to said photodetector means (466) by a beamsplitter (500) located in the optical path of said light beam.

12. An apparatus according to any preceding claim, wherein the detection means includes means for separately counting electrical pulses corresponding to the pulses of backscattered light, the electrical pulses being distributed in a plurality of ranges of pulse length, whereby the numbers of particles in a plurality of size ranges are determined.

13. An apparatus according to Claim 12, wherein the detection means comprises a plurality of first counters (250-253), each first counter being associated with a particular range of pulse lengths, means responsive to each electrical pulse (230-238) for determining the pulse length and providing a signal to a selected first counter in whose range the pulse length falls, and enable means (206,210) for providing an enable signal operative to enable the selected first counter to increment its count, the enable means providing the enable signal if the rise or fall time of a pulse is below a predetermined threshold.

14. An apparatus according to any preceding claim, wherein the illumination means comprises a monomode fiber optic cable (470) and a laser diode (464) including means for coupling light from the laser diode into a first end of the monomode fiber optic cable, the optical system (458) being positioned to receive light from a second end of the monomode fiber optic cable.

15. An apparatus according to any preceding claim, wherein the photodetector means comprises a photodetector and a return fiber optic cable (472) having a first end positioned to receive light backscattered by particles at the focal spot (462) from the optical system, and a second end coupled to the photodetector, and wherein the apparatus is physically divided into (i) intrinsically safe probe (45) comprising the optical system (458) and having no electrical components and (ii) a controller (452) comprising the laser diode (464), the photodetector (466) and the detection means.

16. An apparatus according to any preceding claim wherein said illumination means is arranged to emit at two different wavelengths and said photodetector means (574,576) is arranged to detect backscattered light pulses of said two wavelengths, said detection means being arranged to compare the backscattered intensities at said wavelengths so as to characterise individual particles.

17. A method of analysing particles contained in a fluid medium, using an apparatus as defined in claims 1-16 or 19-25.

18. A method according to claim 17, further characterised in that the widths of those electrical signal pulses corresponding to backscattered light pulses originating at said focal spot (84) are selected for measurement.

19. An apparatus according of claims 1-16, further characterised in that said detection means includes discrimination means (206) which is arranged to discriminate against pulses in said electrical signal having a rise time or fall time above a predetermined threshold.

20. An apparatus according to claim 19, further characterised in that said photodetector means (106) and detection means are responsive to backscattered light from particles which intercept the light beam (82) at the focal spot (84) and discriminate against backscattered light from particles which intercept the beam in front of or behind the focal spot and partially occlude said light beam.

21. An apparatus according to claim 19 or claim 20, in the form of a housing (20) having a window (30) in its outer wall, further characterised in that said illumination means is arranged to direct said beam (82) through said window to a focal spot (84) located outside said window.

22. An apparatus according to claim 21 further characterised in that the detection means includes means (360 - 368) for producing an integrated amplitude signal having a magnitude corresponding to the average amplitude of the electrical signal, and wherein the illumination means includes means (76,80) for adjusting the distance between the focal spot (84) and the window (30) to enable the integrated signal amplitude to be maximised.

23. An apparatus according to any of claims 19 to 22, further comprising scanning means (112) for scanning the focal spot (84) through the fluid medium.

24. An apparatus according to any of claims 19 to 23, wherein the photodetector means comprises a photodetector and a return fibre optic cable (472) having a first end positioned to receive light backscattered by particles at the focal spot (462) from the optical system and a second end coupled to the photodetector, and wherein the apparatus is divided into (i) an intrinsically safe probe (45) comprising the optical system (458) and having no electrical components and (ii) a controller (452) comprising the laser diode (464), the photodetector (466) and the detection means.

25. An apparatus according to any of claims 19 to 24 wherein said illumination means is arranged to emit at two different wavelengths and said photodetector means (574,576) is arranged to detect backscattered light pulses of said two wavelengths, said detection means being arranged to compare the backscattered intensities at said wavelengths so as to characterise individual particles.

**Patentansprüche**

1. Vorrichtung zum Analysieren von in einem fluiden Medium enthaltenen Partikeln, wobei die Vorrichtung umfaßt:

ein Beleuchtungsmittel, das eine optische Quelle (100) und ein optisches System (104) aufweist, welches zum Empfangen von Licht aus der optischen Quelle und zum Fokussieren eines Strahls (82) des Lichts in den Brennpunkt (84) in dem fluiden Medium angeordnet ist; ein Photodetektormittel (106), das zum Detektieren von durch die Unterbrechung des Lichtstrahls durch die Partikel verursachten Lichtpulsen und zum Erzeugen eines korrespondierenden elektrischen Signals angeordnet ist; und ein Detektionsmittel, das zum Empfangen des elektrischen Signals geschaltet ist, wobei das Detektionsmittel ein Größenmessungsmittel (204, A1-A4, 234-238, 244-247) aufweist, das zum Messen der zeitlichen Perioden angeordnet ist, in welchen individuelle Partikel durch den Lichtstrahl beleuchtet sind, um aus den Perioden und der Geschwindigkeit des fluiden Mediums relativ zu dem Brennpunkt eine zu der Größe der Partikel korrespondierende Angabe herzuleiten;

dadurch gekennzeichnet, daß das Photodetektormittel (106) zum Detektieren von von den Partikeln rückgestreuten Lichtpulsen bei Partikelkonzentrationen von 0,01 bis zu höher als 20 Volumenprozent des fluiden Mediums durch ein einziges optisches Eingangsfenster (30) angeordnet ist, durch welches Fenster sowohl das Licht aus dem Beleuchtungsmittel als auch die zu dem Photodetektor rückgestreuten Lichtpulse hindurchtreten, und daß das Beleuchtungsmittel ein Mittel (76, 80) zum Einstellen der Distanz zwischen dem Brennpunkt und dem Fenster aufweist.

2. Vorrichtung nach Anspruch 1, weiter dadurch gekennzeichnet, daß das Photodetektormittel und das Detektionsmittel auf von Partikeln rückgestreutes Licht ansprechen, welche den Lichtstrahl (82) in dem Brennpunkt (84) unterbrechen, und von Partikeln rückgestreutes Licht diskriminieren, welche den Strahl vor oder hinter dem Brennpunkt unterbrechen und den Lichtstrahl teilweise okkludieren.

3. Vorrichtung nach Anspruch 2, weiter dadurch gekennzeichnet, daß das Detektionsmittel ein Diskriminierungsmittel (206) aufweist, das zum Diskriminieren von in dem elektrischen Signal enthaltenen Pulsen angeordnet ist, welche eine Anstiegszeit oder Abfallzeit oberhalb einer vorbestimmten Schwelle aufweisen, wobei derartige elektrische Signalpulse zu rückgestreuten Lichtpulsen von Partikeln vor oder hinter dem Brennpunkt korrespondieren.

4. Vorrichtung nach Anspruch 2 oder Anspruch 3, weiter dadurch gekennzeichnet, daß das Photodetektormittel (106) auf den Brennpunkt fokussiert ist.

5. Vorrichtung nach einem der vorhergehenden Ansprüche, worin die optische Quelle eine Laserdiode (100) ist und das optische System zum Erzeugen einer Abbildung des abstrahlenden Bereichs der Laserdiode in dem Brennpunkt (84) angeordnet ist, wobei der Brennpunkt Dimensionen aufweist, die denen des abstrahlenden Bereichs vergleichbar sind.

6. Vorrichtung nach einem der vorhergehenden Ansprüche in der Form eines Gehäuses (20) mit einem Fenster (30) in seiner äußeren Wand, weiter dadurch gekennzeichnet, daß das Beleuchtungsmittel zum Richten des Strahls (82) durch das Fenster zu einem außerhalb des Fensters angeordneten Brennpunkt (84) angeordnet ist.

7. Vorrichtung nach Anspruch 6, weiter dadurch gekennzeichnet, daß das Detektionsmittel ein Mittel (360-368) zum Erzeugen eines integrierten Amplitudensignals aufweist, das eine zu der mittleren Amplitude des elektrischen Signals korrespondierende Größe aufweist, und worin das Mittel (76, 80) zum Einstellen der Distanz zwischen dem Brennpunkt (84) und dem Fenster (30) derart ausgebildet ist, daß es ermöglicht, daß die integrierte Signalamplitude maximiert wird.

8. Vorrichtung nach einem der vorhergehenden Ansprüche, die weiter ein Scanningmittel (112) zum Scannen des Brennpunkts (84) durch das fluide Medium umfaßt.

9. Vorrichtung nach Anspruch 8 sowie abhängig von Anspruch 6 oder Anspruch 7, worin das Scanningmittel (112) zum Scannen des Brennpunkts in einer zu dem Fenster (30) parallelen Richtung angeordnet ist.

10. Vorrichtung nach Anspruch 1, worin die optische Quelle (380) und das Photodetektormittel (406) zum Scannen des fluiden Mediums derart angeordnet sind, daß sich Licht aus der optischen Quelle bzw. durch das Photodetektormittel detektierte Lichtpulse entlang eines gemeinsamen Lichtwegs zu und von dem gescannten Brennpunkt (400) hin- bzw. herbewegen.

11. Vorrichtung nach einem der vorhergehenden Ansprüche, worin von dem Brennpunkt (84) rückgestreutes Licht durch das optische System (450) gesammelt und durch einen in dem Lichtweg des Lichtstrahls angeordneten Strahlenteiler (500) zu dem Photodetektormittel (466) gerichtet wird.

12. Vorrichtung nach einem der vorhergehenden Ansprüche, worin das Detektionsmittel ein Mittel zum separaten Zählen von zu den Pulsen rückgestreuten Lichts korrespondierenden elektrischen Pulsen aufweist, wobei die elektrischen Pulse in eine Vielzahl von Pulslängenbereichen verteilt sind, wodurch die Anzahlen an Partikeln in einer Vielzahl von Größenbereichen bestimmt werden.

13. Vorrichtung nach Anspruch 12, worin das Detektionsmittel eine Vielzahl von ersten Zählern (250-253), wobei jeder erste Zähler mit einem bestimmten Pulslängenbereich assoziiert ist, ein auf jeden elektrischen Puls (230-238) ansprechendes Mittel zum Bestimmen der Pulslänge und zum Liefern eines Signals zu einem ausgewählten ersten Zähler, in dessen Bereich die Pulslänge fällt, und ein Freigabemittel (206, 210) zum Liefern eines Freigabesignals umfaßt, welches dahingehend wirksam ist, dem ausgewählten ersten Zähler ein Erhöhen seiner Zählung zu ermöglichen, wobei das Freigabemittel das Freigabesignal liefert, wenn die Anstiegs- oder Abfallzeit eines Pulses unterhalb einer vorbestimmten Schwelle liegt.

14. Vorrichtung nach einem der vorhergehenden Ansprüche, worin das Beleuchtungsmittel ein Einmodenlichtleitfaserkabel (470) und eine Laserdiode (464) einschließlich eines Mittels zum Koppeln von Licht aus der Laserdiode in ein erstes Ende des Einmodenlichtleitfaserkabels umfaßt, wobei das optische System (458) zum Empfangen von Licht aus einem zweiten Ende des Einmodenlichtleitfaserkabels angeordnet ist.

15. Vorrichtung nach einem der vorhergehenden Ansprüche, worin das Photodetektormittel einen Photodetektor und ein Lichtleitfaserkabel (472) zur Rückleitung umfaßt, welches ein zum Empfangen von durch in dem Brennpunkt (462) des optischen Systems befindlichen Partikeln rückgestreutem Licht angeordnetes erstes Ende und ein mit dem Photodetektor verbundenes zweites Ende aufweist, und worin die Vorrichtung physisch in (i) einen eigensicheren Fühler (45), der das optische System (458) umfaßt und keine elektrischen Komponenten aufweist, und (ii) einen Kontroller (452) unterteilt ist, der die Laserdiode (464), den Photodetektor (466) und das Detektionsmittel umfaßt.

**16.** Vorrichtung nach einem der vorhergehenden Ansprüche, worin das Beleuchtungsmittel zum Emittieren bei zwei verschiedenen Wellenlängen und das Photodetektormittel (574, 576) zum Detektieren rückgestreuter Lichtpulse der beiden Wellenlängen angeordnet sind, wobei das Detektionsmittel zum Vergleichen der rückgestreuten Intensitäten bei den Wellenlängen angeordnet ist, um individuelle Partikel zu charakterisieren.

**17.** Verfahren zum Analysieren von in einem fluiden Medium enthaltenen Partikeln, wobei eine wie in den Ansprüchen 1-16 oder 19-25 definierte Vorrichtung verwendet wird.

**18.** Verfahren nach Anspruch 17, weiter dadurch gekennzeichnet, daß die Breiten der elektrischen Signalpulse zur Messung ausgewählt werden, die zu von dem Brennpunkt (84) ausgehenden rückgestreuten Lichtpulsen korrespondieren.

**19.** Vorrichtung nach einem der Ansprüche 1-16, weiter dadurch gekennzeichnet, daß das Detektionsmittel ein Diskriminierungsmittel (206) aufweist, das zum Diskriminieren von in dem elektrischen Signal enthaltenen Pulsen angeordnet ist, welche eine Anstiegszeit oder Abfallzeit oberhalb einer vorbestimmten Schwelle aufweisen.

**20.** Vorrichtung nach Anspruch 19, weiter dadurch gekennzeichnet, daß das Photodetektormittel (106) und das Detektionsmittel auf von Partikeln rückgestreutes Licht ansprechen, welche den Lichtstrahl (82) in dem Brennpunkt (84) unterbrechen, und von Partikeln rückgestreutes Licht diskriminieren, welche den Strahl vor oder hinter dem Brennpunkt unterbrechen und den Lichtstrahl teilweise okkludieren.

**21.** Vorrichtung nach Anspruch 19 oder Anspruch 20 in der Form eines Gehäuses (20) mit einem Fenster (30) in seiner äußeren Wand, weiter dadurch gekennzeichnet, daß das Beleuchtungsmittel zum Richten des Strahls (82) durch das Fenster zu einem außerhalb des Fensters angeordneten Brennpunkt (84) angeordnet ist.

**22.** Vorrichtung nach Anspruch 21, weiter dadurch gekennzeichnet, daß das Detektionsmittel ein Mittel (360-368) zum Erzeugen eines integrierten Amplitudensignals aufweist, das eine zu der mittleren Amplitude des elektrischen Signals korrespondierende Größe aufweist, und worin das Beleuchtungsmittel ein Mittel (76, 80) zum Einstellen der Distanz zwischen dem Brennpunkt (84) und dem Fenster (30) aufweist, um zu ermöglichen, daß die integrierte Signalamplitude maximiert wird.

**23.** Vorrichtung nach einem der Ansprüche 19 bis 22, die weiter ein Scanningmittel (112) zum Scannen des Brennpunkts (84) durch das fluide Medium umfaßt.

**24.** Vorrichtung nach einem der Ansprüche 19 bis 23, worin das Photodetektormittel einen Photodetektor und ein Lichtleitfaserkabel (472) zur Rückleitung umfaßt, welches ein zum Empfangen von durch in dem Brennpunkt (462) des optischen Systems befindlichen Partikeln rückgestreutem Licht angeordnetes erstes Ende und ein mit dem Photodetektor verbundenes zweites Ende aufweist, und worin die Vorrichtung in (i) einen eigensicheren Fühler (45), der das optische System (458) umfaßt und keine elektrischen Komponenten aufweist, und (ii) einen Kontroller (452) unterteilt ist, der die Laserdiode (464), den Photodetektor (466) und das Detektionsmittel umfaßt.

**25.** Vorrichtung nach einem der Ansprüche 19 bis 24, worin das Beleuchtungsmittel zum Emittieren bei zwei verschiedenen Wellenlängen und das Photodetektormittel (574, 576) zum Detektieren rückgestreuter Lichtpulse der beiden Wellenlängen angeordnet sind, wobei das Detektionsmittel zum Vergleichen der rückgestreuten Intensitäten bei den Wellenlängen angeordnet ist, um individuelle Partikel zu charakterisieren.

## Revendications

**1.** Appareil pour l'analyse de particules contenues dans un milieu ou agent fluide, l'appareil comprenant :

des moyens d'éclairage comprenant une source optique (100) et un système optique (104) apte à recevoir de la lumière à partir d'une source optique et à focaliser un rayon (82) de la lumière sur le point focal (84) dans l'agent fluide ; un photodétecteur (106) apte à détecter des impulsions lumineuses dues à l'interception du faisceau de lumière par les particules et à produire un signal électrique correspondant, et un moyen de détection raccordé de façon à recevoir le signal électrique, le moyen de détection comprenant des moyens de mesure de tailles (204, A1-A4, 234-238, 244-247) aptes à mesurer les périodes de temps d'éclairage des particules individuelles par le faisceau lumineux pour dériver à partir des périodes et de la vitesse de l'agent fluide par rapport au point focal, une indication correspondant à la taille des particules ;

caractérisé en ce que le photodétecteur (106) est apte à détecter les impulsions lumineuses rétrodiffusées à partir de ces particules, à des concentrations particulaires de 0,01 % à des valeurs supérieures à 20 % en volume de l'agent fluide, à travers une seule fenêtre d'accès optique (30), et à travers laquelle fenêtre la lumière provenant du moyen d'éclairage et les impulsions lumineuses rétrodiffusées passent au photodétecteur et en ce que les moyens d'éclairage comprennent des moyens (76, 80) pour ajuster la distance entre le point focal et la fenêtre.

2. Appareil selon la revendication 1, caractérisé en ce que le photodétecteur et le moyen de détection sont sensibles à la lumière rétrodiffusée en provenance de particules qui interceptent le faisceau lumineux (82) au point focal (84), font la discrimination vis-à-vis de la lumière rétrodiffusée provenant de particules qui interceptent le faisceau devant ou derrière le point focal et occultent partiellement ie faisceau lumineux.

3. Appareil selon la revendication 2, caractérisé de plus en ce que le moyen de détection comprend un moyen de discrimination (206) qui est apte à faire la discrimination vis-à-vis d'impulsions dans le signal électrique ayant un temps de montée ou un temps de descente au-dessus d'un seuil prédéterminé, ces impulsions de signaux électriques correspondant aux impulsions de lumière rétrodiffusée à partir de particules devant ou derrière le point focal.

4. Appareil selon la revendication 2 ou la revendication 3, caractérisé de plus en ce que le photodétecteur (106) est focalisé sur le point focal.

5. Appareil selon l'une quelconque des revendications précédentes, dans lequel la source optique est une diode laser (100) et le système optique est apte à former une image de la zone radiante de la diode laser au point focal (84), le point focal ayant des dimensions comparables à celles de la zone radiante.

6. Appareil selon l'une quelconque des revendications précédentes, sous forme d'un logement (20) ayant une fenêtre (30) dans sa paroi extérieure, caractérisé de plus en ce que le moyen d'éclairage est apte à diriger le faisceau (82) par la fenêtre sur un point focal (84) situé à l'extérieur de cette fenêtre.

7. Appareil selon la revendication 6, caractérisé de plus en ce que le moyen de détection comprend des moyens (360-368) pour produire un signal d'amplitude intégré ayant une implitude correspondant à l'amplitude moyenne du signal électrique, et dans lequel les moyens (76, 80) aptes à ajuster la distance entre le point focal (84) et la fenêtre (30) sont tels à permettre de maximiser l'amplitude de signal intégré.

8. Appareil selon l'une quelconque des revendications précédentes, comprenant de plus un moyen de scannographie (112) apte à scannographier le point focal (84) à travers l'agent fluide.

9. Appareil selon la revendication 8, telle que dépendante de la revendication 6 ou de la revendication 7, dans lequel le moyen de scannographie (112) est apte à scannographier le point focal dans une direction parallèle à la fenêtre (30).

10. Appareil selon la revendication 1, dans lequel la source optique (380) et le photodétecteur (406) sont aptes à scannographier l'agent fluide de sorte que la lumière provenant de la source optique et des impulsions lumineuses détectées par le photodétecteur se déplacent respectivement en va-et-vient à partir du point focal scannographié (400) le long d'une voie optique commune.

11. Appareil selon l'une quelconque des revendications précédentes, dans lequel la lumière rétrodiffusée à partir du point focal (84) est recueillie par le système optique (450) et elle est dirigée sur le photodétecteur (466) par un diviseur de faisceaux (500) situé dans la voie optique du faisceau lumineux.

12. Appareil selon l'une quelconque des revendications précédentes, dans lequel le détecteur comprend des moyens pour compter séparément les impulsions électriques correspondant aux impulsions de la lumière rétrodiffusée, les impulsions électriques étant réparties dans une pluralité de plages de longueur d'impulsion, permettant ainsi de déterminer le nombre de particules dans une pluralité de plages de tailles.

13. Appareil selon la revendication 12, dans lequel le détecteur comprend une pluralité de premiers compteurs (250-253), chaque premier compteur étant associé à une plage particulière de longueur d'impulsion, des moyens sensibles à chaque impulsion électrique (230-238) pour déterminer la longueur d'impulsion et fournir un signal à un premier compteur sélectionné dans la plage duquel tombe la longueur d'impulsion, et des moyens de validation (206, 210) pour fournir un signal de validation opérant pour permettre au premier compteur sélectionné d'incrémenter son comptage, le moyen de validation fournissant le signal de validation si le temps de montée ou le temps de descente d'une impulsion se situe au-dessous d'un seuil prédéterminé.

14. Appareil selon l'une quelconque des revendications précédentes, dans lequel le moyen d'éclairage comprend un câble à fibre optique monomode (470) et une diode laser (464) comprenant des moyens pour coupler la lumière provenant de la diode laser dans une première extrémité du câble à fibre optique monomode, le système optique (458) étant positionné pour recevoir la lumière à partir d'une seconde extrémité du câble à fibre optique monomode.

15. Appareil selon l'une quelconque des revendications précédentes, dans lequel le photodétecteur comprend un photodétecteur et un câble à fibre optique de retour (472) avec une première extrémité positionnée pour recevoir la lumière rétrodiffusée par les particules au niveau du point focal (462) du système optique, et une seconde extrémité couplée au photodétecteur, et dans lequel l'appareil est physiquement divisé en (i) une sonde intrinsèquement sûre (45) comprenant le système optique (458) et ne comportant pas de composant électrique et (ii) un organe de contrôle (452) comprenant la diode laser (464), le photodétecteur (466) et le détecteur.

16. Appareil selon l'une quelconque des revendications précédentes, dans lequel le moyen d'éclairage est apte à émettre au niveau de deux longueurs d'onde différentes et le photodétecteur (574, 576) est apte à détecter les impulsions de lumière rétrodiffusées de ces deux longueurs d'onde, le détecteur étant apte à comparer les intensités rétrodiffusées à ces longueurs d'onde de façon à caractériser les particules individuelles.

17. Procédé d'analyse de particules contenues dans un milieu de fluide en utilisant un appareil tel que défini dans les revendications 1 à 16 ou 19-25.

18. Procédé selon la revendication 17, caractérisé de plus en ce que les largeurs de ces impulsions de signaux électriques correspondant aux impulsions de lumière rétrodiffusées provenant du point focal (84) sont sélectionnées pour la mesure.

19. Appareil selon l'une quelconque des revendications 1 à 16, caractérisé de plus en ce que le détecteur comprend un moyen de discrimination (206) qui est apte à faire la discrimination vis-à-vis d'impulsions dans le signal électrique ayant un temps de montée ou un temps de descente au-dessus d'un seuil prédéterminé.

20. Appareil selon la revendication 19, caractérisé de plus en ce que le photodétecteur (106) et le détecteur sont sensibles à la lumière rétrodiffusée provenant de particules qui interceptent le faisceau lumineux (82) au point focal (84) et effectuent une discrimination vis-à-vis de la lumière rétrodiffusée à partir de particules qui interceptent le faisceau devant ou derrière le point focal et occultent partiellement le faisceau lumineux.

21. Appareil selon la revendication 19 ou la revendication 20, sous la forme d'un logement (20) comportant une fenêtre (30) dans sa paroi extérieure, caractérisé de plus en ce que le moyen d'éclairage est apte à diriger le faisceau (82) à travers la fenêtre vers un point focal (84) situé à l'extérieur de cette fenêtre.

22. Appareil selon la revendication 21, caractérisé de plus en ce que le moyen de détection comprend des moyens (360 - 368) pour produire un signal d'amplitude intégré ayant une grandeur correspondant à la grandeur moyenne du signal électrique, et dans lequel le moyen d'éclairage comprend des moyens (76, 80) pour ajuster la distance entre le point focal (84) et la fenêtre (30) pour permettre de maximiser la grandeur de signal intégré.

23. Appareil selon l'une quelconque des revendications 19 à 22, comprenant de plus des moyens de scannographie (112) aptes à scannographier le point focal (84) à travers l'agent fluide.

24. Appareil selon l'une quelconque des revendications 19 à 23, dans lequel le photodétecteur comprend un photodétecteur et un câble à fibre optique de retour (472) comportant une première extrémité positionnée pour recevoir la lumière rétrodiffusée par les particules au niveau du point focal (462) à partir du système optique, et une seconde extrémité couplée au photodétecteur, et dans lequel l'appareil est divisé en (i) une sonde intrinsèquement sûre (45) comprenant le système optique (458) et ne comportant pas de composant électrique et (ii) un organe de contrôle (452) comprenant la diode laser (464), le photodétecteur (466) et le détecteur.

25. Appareil selon l'une quelconque des revendications 19 à 24, dans lequel le moyen d'éclairage est apte à émettre en deux longueurs d'onde différentes et le photodétecteur (574, 576) est apte à détecter les impulsions de lumière rétrodiffusée de ces deux longueurs d'onde, le détecteur étant apte à comparer les intensités rétrodiffusées à ces longueurs d'onde de façon à caractériser les différentes particules.

Fig.1.

*Fig. 2.*

*Fig. 3.*

EP 0 289 200 B2

Fig. 4.

Fig. 5

Fig. 6

*Fig. 7.*

Fig. 8.

Fig. 9A.
LINE 182

Fig. 9B.
LINE 202

Fig. 9C.
LINE 212

Fig. 9D.
LINE 226

Fig. 9E.
N2

Fig. 10.

| A1 | A2 | A3 | A4 | N1 | N2 | N3 | N4 |
|----|----|----|----|----|----|----|----|
| 1 | 1 | 1 | 1 | 1 | 1 | 1 | 1 |
| 0 | 1 | 1 | 1 | 0 | 1 | 1 | 1 |
| 0 | 0 | 1 | 1 | 1 | 0 | 1 | 1 |
| 0 | 0 | 0 | 1 | 1 | 1 | 0 | 1 |
| 0 | 0 | 0 | 0 | 1 | 1 | 1 | 0 |

EP 0 289 200 B2

382 384 386 388

380 400

402

394 404

14 14

406

408

*Fig.13*

440

*Fig.14.* 442 444

290 280 282

283

286 292

DETECTION CIRCUIT 284

288 *Fig.11.*

DISPLAY

PROBE

Fig.12.

Fig. 15.

Fig. 16.

Fig. 17.

Fig.18.